Europäisches Patentamt

European Patent Office

Office européen des brevets

(11) Publication number: **0 032 995**
**A2**

(12) **EUROPEAN PATENT APPLICATION**

(21) Application number: **80107689.4**

(22) Date of filing: **19.01.79**

(51) Int. Cl.³: **C 08 G 69/24**

(30) Priority: **24.04.78 US 899066**

(43) Date of publication of application:
**05.08.81 Bulletin 81/31**

(84) Designated Contracting States:
**BE CH DE FR GB IT LU NL SE**

(60) Publication number of the earlier application
in accordance with Art. 76 EPC: **0 005 001**

(71) Applicant: **Barnes, Arthur Conard**
**482 Trinity Pass Road**
**New Canaan Connecticut 06840(US)**

(71) Applicant: **Barnes, Carl Edmund**
**482 Trinity Pass Road**
**New Canaan Connecticut 06840(US)**

(72) Inventor: **Barnes, Arthur Conard**
**482 Trinity Pass Road**
**New Canaan Connecticut 06840(US)**

(72) Inventor: **Barnes, Carl Edmund**
**482 Trinity Pass Road**
**New Canaan Connecticut 06840(US)**

(74) Representative: **Blake, John Henry Francis et al,**
**BROOKES AND MARTIN High Holborn House 52/54 High Holborn**
**London WC1V 6SE(GB)**

(54) Polymerization of 2-pyrrolidone with alkali metal pyrrolidonates and polymerization products thus obtained.

(57) Pure white polymers of 2-pyrrolidone are obtained when using $SO_2$ as the activator by using the rubidium or cesium salt of 2-pyrrolidone as the alkaline catalyst in place of the sodium or potassium salts customarily used, which cause the formation of yellow polymer.

EP 0 032 995 A2

- 1 -

POLYMERIZATION OF 2-PYRROLIDONE WITH ALKALI METAL

PYRROLIDONATES, AND POLYMERIZATION PRODUCTS THUS

OBTAINED

This invention relates to the polymerization of 2-pyrrolidone and more particularly to the formation of polymers which are white in color and have thermal characteristics such that they may be melt extruded when $SO_2$ is used as the activator.

The formation of polymers of 2-pyrrolidone involving the use of alkaline catalysts under substantially anhydrous conditions was first disclosed in U.S. Patent No. 2,638,463. The best catalysts are the alkali metal salts of 2-pyrrolidone which are best formed from the alkali metal hydroxides. The lithium salt is very sparingly soluble and therefore is not a good catalyst and since both rubidium and cesium hydroxides are very expensive, in actual practice either the sodium or potassium salt is normally used.

Subsequent patents, for example U.S. Patent No. 2,809,958, further disclose the need for a co-catalyst or "activator" for the polymerization. The vast majority of activators or co-catalysts which have been disclosed in the prior art (for example those disclosed in U.S. Patents Nos. 2,809,958, 3,060,153 and 3,069,392 result in a polymer of medium molecular weight having insufficient thermal stability to withstand the high temperatures required for melt extrusion processes, for example in the formation of textile fibers by melt spinning. It has been found that in order to be satisfactory for this purpose the polymer should have an inherent viscosity of at least 3.0 when measured as a 0.5% solution in hexafluoroisopropanol at 25°C, and a narrow molecular weight distribution indicated by a polydispersity value of 5 or under. A satisfactory test for melt extrudability is disclosed in U.S. Patent No. 3,721,652 at Column 12, Examples 5 (a) and 5 (b).

Of the numerous activators which have been disclosed for activating the polymerization of 2-pyrrolidone, two especially result in markedly higher molecular weights and thermal stabilities. One of these is carbon dioxide, disclosed in U.S. Patent No. 3,721,652 and the other is sulfur dioxide, disclosed in U.S. Patent No. 3,174,951. Polymers formed by using both $CO_2$ and $SO_2$ activators have been successfully melt spun into fibers (Gunter Schirawski, Die Makromolekulare Chemie, 161 (1972) page 67).

However, while the polymer formed when $CO_2$ is used is white, that formed when $SO_2$ is used is ordinarily yellow unless carefully controlled amounts of $SO_2$ are used under certain critical temperatures as disclosed in U.S. Patent No. 4,105,645. The use of $SO_2$ is advantageous however in that lower temperatures for the polymerization may be used as well as much smaller amounts of the activator. It is therefore very desirable to provide a method of preventing the formation of yellow polymer when using $SO_2$ since the color greatly limits its use.

Although all the alkali metal salts of 2-pyrrolidone, with the exception of the lithium salt, have been regarded as equivalent for use as alkaline catalysts in the polymerization of 2-pyrrolidone, we have found to our surprise that both the rubidium and the cesium salts are markedly different in that they prevent the formation of yellow polymer when $SO_2$ is used as the activator.

The present invention provides a method of polymerizing 2-pyrrolidone comprising contacting a substantially anhydrous mixture of monomeric 2-pyrrolidone, a rubidium or cesium salt of 2-pyrrolidone, and sulfur dioxide at a temperature of from 20 to 65°C, whereby a white polymer of 2-pyrrolidone is formed.

The polymerization temperature may range from 20°C to 65°C with a range of from 30°C to 50°C being preferred. At temperatures above 50°C the polymerization rate decreases. At temperatures below 30°C the polymerization rate also decreases.

We have also found that the concentration of the alkali metal pyrrolidonate is important and should preferably be between 4 and 5.5 mol per cent, more preferably from about 4.6 to about 5.2 mol per cent, based on the number of mols of 2-pyrrolidone.

The catalyst may be prepared by adding rubidium or cesium hydroxide to 2-pyrrolidone and distilling off any water present. The amount of rubidium or cesium hydroxide used may vary from 0.01 to 0.15 moles per mol of 2-pyrrolidone, more preferably from 0.01 to 0.1 mols and most preferably from 0.03 to 0.06 mols in order to obtain optimum polymerization rates coupled with high molecular weight polymers.

The activator can be adding directly to the anhydrous mixture to commence polymerization.

The rubidium or cesium hydroxide may also be readily recycled, hence the initial cost of these substances is a less important factor. For example, the resultant polymer may be washed with a solvent for unchanged monomer and/or the alkali metal pyrrolidonate, followed by removing the solvent and drying the remaining mixture, adding more substantially anhydrous 2-pyrrolidone thereto, and then contacting the resulting mixture with an activator to again polymerize the 2-pyrrolidone. The polymer may be washed with water or a lower alcohol to remove unchanged monomer and catalyst. Alternatively it may be washed with

0032995

2-pyrrolidone to recover the catalyst.

In the following Examples the viscosity measurements were made using a 5.0% solution of the polymer in 85% formic acid. When the polymer had completely dissolved, the solution was poured into an empty Gardner Bubble Viscometer tube for comparison at 25°C. With the bubble flow of Gardner No.VG-7375 standard bubble tubes. Some of the higher viscosities required the use of the Gardner VG-7380 series of tubes. These tubes are calibrated in Stokes and the viscosity values are reported in Stokes but for purposes of comparison with other reported viscosities they are also converted to the corresponding value for inherent viscosity when measured as a 0.5 gram per deciliter (g/dl) solution in hexafluoroisopropanol (HFIP) at 25°C.

COMPARATIVE EXAMPLE

100 grams of purified 2-pyrrolidone was added to a 250 ml 3-necked flask equipped with a gas inlet tube, a thermometer for measuring pot temperature and a distillation head also having a thermometer for measuring the temperature of the vapor. The distillation head was connected to a condenser and a receiver having a vacuum connection. Water at about 30-35°C was circulated through the condenser for cooling.

3.3 grams (0.05 mol) of potassium hydroxide pellets of 85% assay was added and the system evacuated to a pressure of 10 mm of mercury. About 15 grams of pyrrolidone was distilled over to remove the water formed by the reaction of the potassium hydroxide with the pyrrolidone.

The mixture was then cooled to room temperature and 0.005 mol $SO_2$ as added as a 25% mixture in dry nitrogen. Nitrogen gas was then admitted to bring the contents to atmospheric pressure and the mixture was poured into a polyethylene polymerization bottle and tightly capped. The bottle was placed in a polymerization oven maintained at 50°C. After a period of 12 hours the bottle was squeezed and the contents found to be quite soft so it was allowed to remain in the oven for a total period of 30 hours. At the end of this time the cake, now hard, was removed and ground in a Wiley mill. After washing and drying the conversion was found to be 60% but the product was distinctly yellow in color.

EXAMPLE 1

The procedure of the Comparative Example 1 was followed except that rubidium hydroxide was substituted for the potassium hydroxide in an equimolar amount (0.05 mol = 5 gm). 0.008 mols of $SO_2$ was used instead of 0.005 in order to exaggerate any color problem.

After 21 hours at $50^O C$ a pure white polymer was obtained with 63% conversion. The viscosity was 27 Stokes corresponding to an IV of 5.6 (HFIP).

EXAMPLE 2

The procedure of Example 1 was followed but using cesium hydroxide in place of the rubidium hydroxide (0.05 mol = 8.8 gm). In removing the water formed by distillation it was noted that the cesium salt of pyrrolidone precipitated when hot but redissolved on cooling. The same effect was noted with the rubidium salt in Example 1 but to a lesser extent.

At the end of 20 hours at $50^O C$ a white cake was formed which after grinding and washing gave a pure white polymer with 60% conversion. The viscosity was 60 Stokes which corresponds to an IV of 6.3 (HFIP).

With this amount of $SO_2$ at $50^O C$ polymerization temperature the polymer formed when KOH is used as the alkali is quite yellow in color.

CLAIMS

1.    A method of polymerizing 2-pyrrolidone comprising contacting a substantially anhydrous mixture of monomeric 2-pyrrolidone, a rubidium or cesium salt of 2-pyrrolidone, and sulfur dioxide at a temperature of from 20 to 65$^{O}$C, whereby a white polymer of 2-pyrrolidone is formed.

2.    A method according to claim 1 further comprising washing the polymer with a solvent for unchanged monomer and/or the alkali metal pyrrolidonate, removing the solvent and drying the remaining mixture, adding more substantially anhydrous 2-pyrrolidone thereto and then contacting the resulting mixture with SO$_2$ to polymerize the 2-pyrrolidone.

3.    A method according to claim 2 in which the polymer is washed with a solvent selected from water and a lower alcohol.

4.    A method according to claim 1 further comprising washing the polymer with 2-pyrrolidone to recover the rubidium or cesium salt, adding more substantially anhydrous 2-pyrrolidone thereto, and then contacting the resulting mixture with SO$_2$ to polymerize the 2-pyrrolidone.

5.    Polymerized 2-pyrrolidone characterized by being substantially white in color and having a polydispersity value of not more than 5 and an inherent viscosity of at least 3.0 when measured as a 0.5 gram per deciliter solution in hexafluoroisopropanol at 25$^{O}$C. and having been catalyzed under substantially anhydrous conditions with a rubidium or cesium salt of 2-pyrrolidone in the presence of sulfur dioxide as an activator, the concentration of sulfur dioxide and the temperature of polymerization being such that without said alkali metal salt the resulting polymer would be substantially yellow in color.